# EUROPEAN PATENT SPECIFICATION

(11) **EP 0 372 602 B1**
(45) Date of publication and mention of the grant of the patent: **10.04.1996**
(21) Application number: 89202833.3
(22) Date of filing: 07.11.1989
(51) Int. Cl.: C08G 67/02

(54) **Thermoset resins**
Hitzehärtbare Harze
Résines thermodurcissables

(30) Priority: 10.11.1988 GB 8826324; 17.01.1989 GB 8900953
(43) Date of publication of application: 13.06.1990
(73) Proprietor: SHELL INTERNATIONALE RESEARCHMAATSCHAPPIJ B.V., NL-2596 HR Den Haag (NL)
(72) Inventor: Smaardijk, Abraham Adriaan, NL-1031 CM Amsterdam (NL); Kramer, Arris Herman, NL-1031 CM Amsterdam (NL)

(56) References cited:
- US-A- 2 495 286
- US-A- 2 557 256
- US-A- 2 846 406

## Description

This invention relates to a thermoset resin, to a process for its preparation, to various uses thereof, and to a precursor composition of the resin.

At the present, thermosetting resin compositions are increasingly employed as materials of established commercial utility. They find their use for example in the automotive, lacquer, paint, and coating industry, and as various castings in small house-hold appliances. However, their use is not limited to these applications, as research is still developing new fields of application. To satisfy clients' wishes a range of resin compositions must be available in which the resin corresponding to the particular needs can be found. For instance, in the lacquer, paint, and coating industry resins are requested to have features such as good adhesion, temperature stability, chemical and stress resistance. Moreover, the thermosetting compositions should have a good processability and preferably be made of cheap and common starting materials.

It is known to prepare thermoset resins or resin compositions from thermoplastic material, e.g. oligomers or polymers (further collectively referred to as "polymers"), by curing. The curing may consist of e.g. a heat treatment, of an (ultraviolet) light treatment, or of a chemical reaction, using a so-called curing agent. The curing treatment generally causes some chemical modification of the molecules of the polymer, usually crossl inking between chains. The latter implies that bridges between chains are made, and when a chemical curing is effectuated, this often means that reactive groups of the molecule of the curing agent link themselves to reactive sites on the polymer chain. Because the molecules of curing agents generally contain at least two reactive groups, the result is formation of a bridge incorporating (a part of) the curing agent's molecule. For instance, agents containing two or more alkoxy groups react with polymer chains containing hydroxyl, carboxyl or amide groups, under formation of crosslinked polymers and an alkanol.

Although many commercial thermosets have excellent properties, they are sometimes rather costly, which may be due to the prices of the polymers from which they are prepared. Moreover, some of them are not very handleable, i.e. they are either not liquid at room temperature (mixing thus being inconvenient), or not miscible with the curing agent, or not processable in other respects.

The Applicants have now found that novel thermoset resins may be prepared from novel thermosetting resin compositions, which compositions comprise a curing agent and a linear, alternating "polyketone" or a functional derivative thereof, which resins are easily processed, present excellent physical and chemical resistance, and are made from inexpensive starting materials such as carbon monoxide and ethene.

It should be mentioned that in US Patent Specification No. 3979374, which relates to the preparation of a thermoplastic derivative of a polyketone containing pyrrolic units, a comparative example is given wherein a copolymer of carbon monoxide and ethene having a molecular weight of about 300,000 daltons is treated with a bifunctional compound, to wit 1,6-hexamethylenediamine. The resulting crosslinked product was not worked up or analysed in any way, and was apparently considered by the inventors of US-3979374 as a product without any practical interest.

It may be remarked too, that EP-A-118312 discloses a chemical curing of polyketones, but the polyketones used and intended therein do not have a linear, alternating structure (instead, they should rather be looked upon as polyolefins having a relatively small number of carbonyl groups randomly dispersed in the polymer backbone), which yields quite different physical and chemical properties.

The present invention accordingly relates to a thermoset resin obtainable by curing a thermoplastic polymer, characterised in that the resin is obtainable by reacting a curing agent with a linear alternating copolymer of carbon monoxide and one or more olefinically unsaturated compounds, or with a curable functional derivative thereof, and in that the weight average molecule weight of the thermoplastic polymer from which the resin is obtainable is in the range of 200 to 20,000 daltons.

The invention also concerns a process for the preparation of a thermoset resin as claimed above, characterised in that a curing agent is reacted with a linear alternating copolymer of carbon monoxide and one or more olefinically unsaturated compounds, or with a curable functional derivative thereof.

It comprises furthermore a thermosetting composition comprising a curing agent and a thermoplastic polymer, characterised in that it comprises as the thermoplastic polymer a linear alternating copolymer of carbon monoxide and one or more olefinically unsaturated compounds, or a curable functional derivative thereof, the weight average molecular weight of the linear alternating copolymer or the curable derivative thereof being in the range of 200 to 20,000 daltons.

The handleability of polymers is closely related to their viscosity, and thus to their molecular weight. Polyketones of low molecular weight are liquid or viscous, and can thus be blended easily with the curing agent, and the resulting thermoset resins are usually liquid or viscous as well, which simplifies their application as a coating or an adhesive. Nevertheless, resins of high molecular weight may be used as coatings etc. too, by applying them as a powder, e.g. by electrostatic or flame spraying techniques The weight average molecular weight of the thermoplastic polymer from which the resin is obtainable, is in the range of 200 to 20,000 daltons, and in particular in the range of 200 to 10,000 daltons. It makes some difference for the viscosity whether the thermoplastic polymer from which the present thermoset resins are obtainable, is a "pure" polyketone or a derivative thereof, and in as much as necessary, this will be addressed at the appropriate places hereafter.

The linear, alternating copolymer of carbon monoxide and one or more olefinically unsaturated compounds is known per se from various patents and patent applications of the Applicants, e.g. No. EP-B-121965. It comprises a repeating unit of formula fA'-C(-O) in which A' stands for a unit derived from the olefinically unsaturated compound A. Thus if A represents the ethene molecule of formula CH₂=CH₂, A'stands for the ethylene biradical of formula -CH2-CH2- It will be understood that copolymerisation of mixtures of olefinically unsaturated compounds (A and B) with CO will give terpolymers in which units of formula [A'-C(=O) alternate randomly with units of formula ⁅B'-C(=O)⁆.

Examples of suitable compounds A are olefinically unsaturated hydrocarbons such as olefins or styrenes, and unsaturated non-hydrocarbons, such as acrylic acid or methacrylates. Preferably the one or more olefinically unsaturated compounds, being monomers of the thermoplastic polymer from which the resin is obtainable, are selected from alkenes, cycloalkenes, arylalkenes, alkadienes and oxycarbonylalkenes, having from 2 to 12 carbon atoms. It is particularly preferred that the one or more olefinically unsaturated compounds, being monomers of the thermoplastic polymer from which the resin is obtainable, comprise at least ethene.

Preferably A is a hydrocarbon, especially of up to 12 carbon atoms, in particular an alkene of up to 8 carbon atoms such as: ethene, propene, butene, pentene, methylbutene, hexene, methylpentene, dimethylbutene, ethylbutene, heptene, methylhexene, dimethylpentene, ethylpentene, trimethylbutene, ethylmethylbutene, octene, methylheptene, dimethylhexene, ethylhexene, trimethylpentene, ethylmethylpentene, propylpentene, dimethylethylbutene, diethyl- butene, and methylpropylbutene. More preferably A is a 1-alkene, ethene or propene being most preferred.

The compound B may be any ethylenically unsaturated compound other than A. Preferably B is a compound selected from alkenes, alkadienes, cycloalkenes, e.g. cyclopentene or cyclohexene, aryl substituted alkenes, e.g. styrene or p-methylstyrene, carbonyloxy substituted alkenes, e.g. acrylic acid, crotonic acid, maleic acid, maleic acid anhydride, fumaric acid, or monomethyl fumarate, or other vinyl-type monomers, such as vinyl chloride, or acrylonitrile. More preferably, B is selected from 1-alkenes, or aryl-substituted 1-alkenes.

Very suitable polyalcohols are polyalcohols having a molecular weight of from 450 to 3500 and preferably of from 1000 to 1500.

Advantageously the thermoplastic polymer from which the resin is obtainable, is a linear alternating copolymer of carbon monoxide and one or more olefinically unsaturated compounds. In other words, the thermoplastic polymer is cured as such, without further derivatisation. In this case, it is preferred that the thermoplastic polymer from which the resin is obtainable, is a linear alternating carbon monoxide/alkylene oligomer having a weight average molecular weight of from 500 to 1,800, represented by the formula 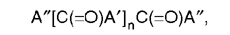 wherein each A" independently is an alkyl group of 2 up to 8 carbon atoms, or an alkoxy group of 1 up to 8 carbon atoms, each A' independently is an alkylene group of 2 up to 8 carbon atoms, and n is such that the weight average molecular weight is as defined.

On the other hand, good results have also been obtained when the thermoplastic polymer from which the resin is obtainable, is a curable functional derivative of a linear alternating copolymer of carbon monoxide and one or more olefinically unsaturated compounds.

Suitable curable functional derivatives of polyketones to be employed in the present invention comprise, in principle, all derivatives of ketone carbonyl groups which contain a function capable of reacting with a curing agent. They are selected, inter alia, from the group comprising polybisphenols, acrylonitrile derivatives, polyaminoacids, Mannich addition products, polythiols, dithiocyclic group substituted polyketones, hemimercaptals, polyamides, polyamines, furan derivatives, polycyanohydrins, polyoxims, polyphosphonates, polyvinyl ketones, polyhydroxymethylketones, polyaminoalcohols, polyketone ketals and hemiketals, polyepoxide derivatives, polyhydroxysulphonate adducts, polyhydroxyphosphonate adducts, polydihalo derivatives, polyhaloketone derivatives, polyhydrazone derivatives and polyalcohols.

These suitable derivatives are discussed in more detail hereafter:
1. Polybisphenols, used according to the following scheme: 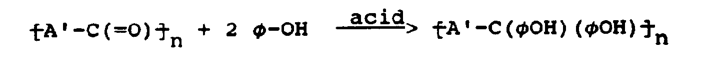 This compound is directly curable by reaction with e.g. formaldehyde, but may also be glycidated first: 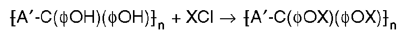 which product can be cured using a known curing agent for epoxides, such as an amine, an anhydride or a melamine-formaldehyde resin.
   Herein represents an optionally substituted phenyl group, A' may have the meanings given above, preferably an ethylene biradical, and X stands for the 2,3-epoxyprop-1-yl group (XCI thus being a-epichlorohydrin).
2. Acrylonitrile derivatives, used according to the following scheme (a copolymer of CO and ethene is used by way of example): 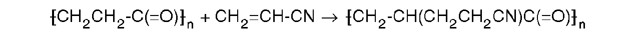 This compound is directly curable by reaction of the carbonyl groups with e.g. a polyamine, or indirectly by hydrolysis of the cyano group to a carboxylic acid, acid amide, or ester, followed by curing using e.g. a triol in the presence of acid.
3. Polyaminoacids, which can be prepared via hydantoin rings according to the scheme below: 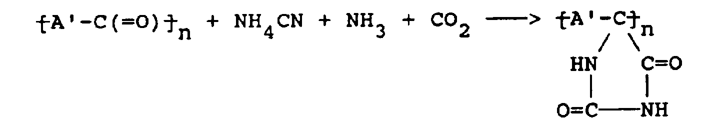 which products are reacted first with a base and then with acid, thus converting the hydantoin ring into a linear group of structure -NH-C(=O)-NH-COOH. The latter group is converted into an aminoacid group by evolution of C0₂ and hydrolysis of the amide to give polymers of formula fA'-C(NH₂)(COOH) nt. These are curable by crosslinking in ways known per se.
4. Mannich addition products, according to the following scheme (a copolymer of CO and ethene is used by way of example): 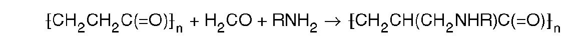 In this reaction, R represents a hydrocarbyl group, in particular an (ar)alkyl or (alk)aryl group, of up to 12 carbon atoms. Further reaction of this addition product with polyketone and in the presence of H₂CO causes bridging between chains via the nitrogen atom. In case NH₃ or NH₄CI is used instead of the primary amine RNH₂, three-dimensional crosslinking takes place.
5. Thiol based compounds:
   (a) Polythiols, via the following sequence: 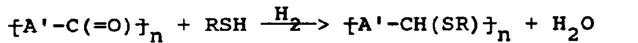 In this reaction, R has the meanings given in the preceding paragraph. The polythiol product may be cured in any manner known per se, also by making S-S bridges between adjacent chains.
   (b) Dithiocyclic groups substituted into polyketones.
      This reaction follows the scheme below: 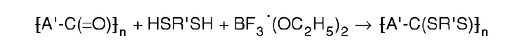 In this reaction R' represents a bridging group having 2, 3 or 4 atoms in the bridge, preferably an ethylene group (yielding a 1,3-dithiolane). The product may be cured in any manner known per se, optionally after further derivatisation.
   (c) Hemimercaptals, via the following scheme: 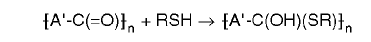 The product may be cured in any manner known per se, optionally after further derivatisation.
6. Polyamides, which are obtainable by reaction with hydrazoic acid, in the presence of an acid catalyst:
   ⁅A'-C(=O)⁆ₙ + HN₃ → ⁅A'-NH-C(=O)⁆ₙ
   Cross-linking of this product may be effected using e.g. an epoxide or anhydride curing agent.
7. Polyamines, which are obtainable by reaction of polyketones with hydrogen and with ammonia or a primary or secondary amine: 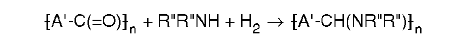 wherein each R" independently represents a group R as defined hereinbefore, or a hydrogen atom. The polyamine may be cured with e.g. an epoxide or anhydride curing agent.
8. Furan derivatives, which are obtainable by mild heating in the presence of an acid (H+), followed by a Diels-Alder addition reaction using e.g. maleic acid anhydride, according to the following reactions (a copolymer of CO and ethene is used by way of example): 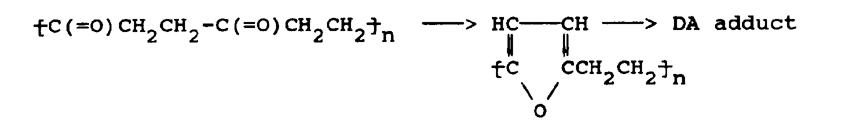 The obtained polyanhydride is curable using e.g. an epoxide.
9. Polycyanohydrins, which can be obtained by addition of HCN to (part of) the carbonyl groups, and which may be converted further to polyamides, acids or esters, following the reactions below: 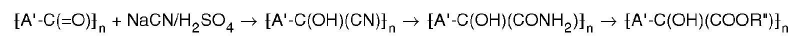 R" has the meaning defined hereinbefore. The polymers formed may be cured directly in the case of the polyamides, whereas the acids and esters may be dehydrated first to unsaturated acids or esters, after which curing is possible using any agent known per se for similar compounds.
10. Polyoxims which are obtainable by reaction of (part of) the carbonyl groups with hydroxylamine, optionally followed by a reaction with PCI_{S} to rearrange the oxim: 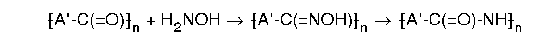 Curing of the carbonyl groups may be effected using any suitable crosslinking agent, as discussed hereinafter.
11. Polyphosphonates, which are obtained through reaction of dialkylphosphonates with (part of) the carbonyl groups of a polyketone: 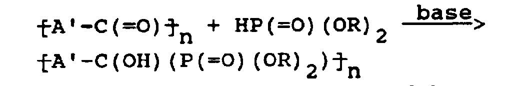 The products are then cured by a crosslinking reaction on the carbonyl and/or the hydroxy groups using any of the suitable curing agents specified hereinafter.
12. Polyvinyl ketones or polyhydroxymethylketones, which are the result of condensing polyketones with formaldehyde (Tollens' reaction) according to the scheme below (a copolymer of CO and ethene is used by way of example): 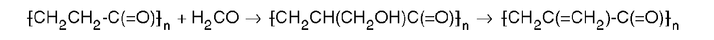 The polymers are crosslinked on their carbonyl, vinyl or hydroxyl functions.
13. Polyaminoalcohols, which are obtained by mild reduction, using for instance LiAIH₄, of the polyoxims (prepared according to the scheme of § 10 above): 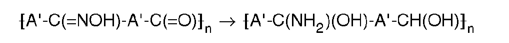 The polymers are crosslinked on their amine and/or hydroxyl functions.
14. Polyketone ketals and hemiketals, which are obtainable in known ways employing a basic reagent: 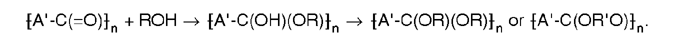 Herein R' again stands for a bridging group. These ketals and hemiketals are cured using crosslinking agents such as polyamines or epoxides.
15. Polyepoxide derivatives of polyketones, obtainable by (partial) conversion of the carbonyl groups by reaction with a reagent like dimethylsulphoxonium methylide Q), formed as follows: 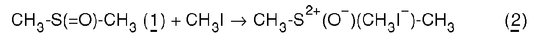 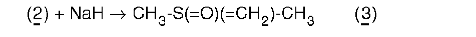 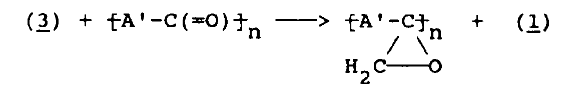 These polyepoxide derivatives are crosslinked by reaction with conventional epoxide curing agents, e.g. amines, anhydrides or melamine-formaldehyde resins.
16. Polyhydroxysulphonate adducts obtainable by reaction of (part of) the carbonyl groups with sodium bisulphite: 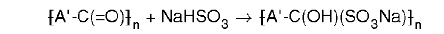 The adducts are soluble in water at lower values of n, and are easily cured to thermosets.
17. Polyhydroxyphosphonate adducts obtainable by reaction of (part of) the carbonyl groups of the polyketone with phosphorus trichloride (PC1₃): 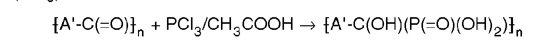 The adducts are soluble in water at lower values of n, and are easily cured to thermosets.
18. Polydihalo derivatives from polyketones, obtainable by reaction with phosphorus pentachloride: 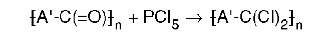 Curing to thermoset polymers is possible by interchain reactions, optionally incorporating curing agent molecules.
19. Polyhaloketone derivatives, obtainable by reaction of sulphuryl chloride with polyketones having a tertiary hydrogen atom (a co- or terpolymer containing units based on CO and propene is used by way of example): 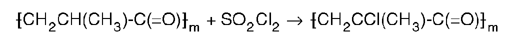 These a-chloroketone products are optionally reduced, thus yielding epoxide rings, which may be cured in a way known per se.
20. Polyhydrazone derivatives of polyketones, obtainable by reaction thereof with hydrazine, as illustrated below (a copolymer of CO and ethene is used by way of example): 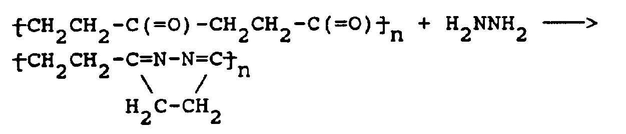 These products are curable by crosslinking agents reacting with the C=N bonds.
21. Polyalcohols which are obtainable by the reduction of polyketones, along the scheme below:

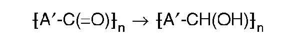

The polyalcohols are obtainable by catalytic reduction of the polyketone with hydrogen gas, or by reduction with sodium borohydride or lithium aluminium hydride in either hexafluoroisopropanol, tetrahydrofuran, or any other suitable solvent. In the event of obtaining the polyalcohols by reduction, the degree of reduction, i.e. the percentage of hydroxy groups formed by reduction related to carbonyl groups originally present, is preferably from 4 to 100 %, more preferably from 20 to 100 %, most preferably from 50 to 100 %.

Excellent resins have been obtained when the curable functional derivative of the copolymer is a polyalcohol. it is preferred that the polyalcohol has a weight average molecular weight of from 450 to 3,500, especially from 1,000 to 2,000.

A number of curing agents and reactions of polyalcohols derived from linear alternating polyketones is illustrated non-limitatively below:
21/1. The well-known Ritter reaction, involving the reaction between an alcohol and a nitrile or hydrogen cyanide yielding an amide (hydrolysable to an amine), can be carried out with a multifunctional cyanide, thus causing crosslinking between chains.
21/2. The hydroxyl groups may be replaced at least in part by halogen atoms, by reaction with a hydrohalogenic acid or with thionyl chloride, and any remaining OH-groups can then be crosslinked.
21/3. Azide groups may be introduced by reaction with diphenylphosphoryl azide, according to the following reaction: 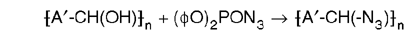 Herein stands for a phenyl group.
21/4. Cyano groups may be introduced by e.g. the following reaction: 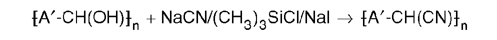
21/5. Hydroperoxides can be formed by reaction with hydrogen peroxide: 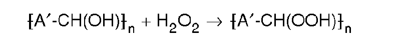
21/6. Phosphonate groups can be included in the polyalcohol by reaction with e.g. phosphorus oxychloride: 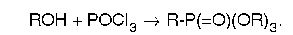 Herein ROH represents the polyalcohol ⁅A'-CH(OH) ₙ⁆ , so that the formula of the final product stands for a three-dimensional crosslinked network.
21/7. Tetrahydrofuran rings are obtainable by condensation of two adjacent hydroxyl groups, using e.g. a strong acid like H₃P0₄: 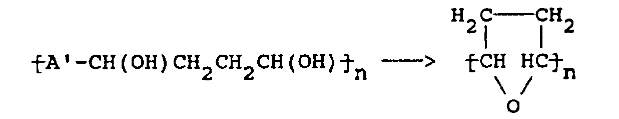 21/8. Ether linkages may be formed by dehydration of two alcohol groups in adjacent chains, using e.g. an alkyl halide in a phase transfer catalyst system. This reaction can be carried out too with epichlorohydrin.
21/9. The polymer chain may be locally dehydrated to yield unsaturated bonds, according to the reaction below: 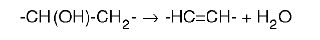
21/10. The polymers can be crosslinked by reacting them with epoxides: 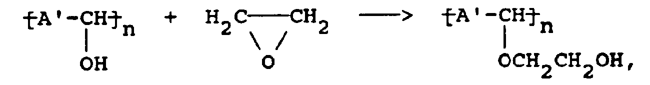 and so on.
21/11. The polymers can be crosslinked by reacting them with (multifunctional) acids or anhydrides, forming ester linkages: 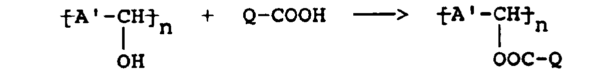 Herein the letter Q stands for a group containing at least one carboxyl group, which links in analogous way to hydroxyl groups of adjacent chains.
21/12. The melamine-formaldehyde type resins can crosslink the polymer chains according to the following scheme (a part of the hexakismethoxymethylmelamine (2,4,6-tris{bis(methoxymethyl)amino}-s-triazine) molecule is taken by way of example): 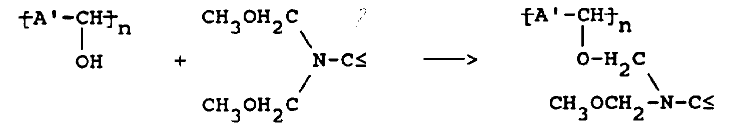 One of the five remaining methoxymethyl groups may then link to another hydroxyl group of the polymer.
21/13. The polyalcohol may be cured by reaction with an isocyanate, yielding a carbamate, which is then converted with isocyanic acid to an allophanate ester, according to the reactions below: 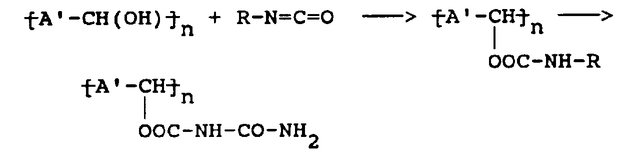 The allophanate enables to link to other chains.
21/14. The reaction with phosphorus trichloride causes crosslinking with other chains by the formation of phosphonate ester bonds, via the unstable phosphite ester, as indicated below:

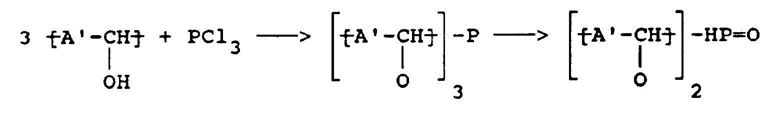

Other suitable but usually less preferred derivatives of polyketones are prepared by the following reactions:
22. Strecker synthesis: 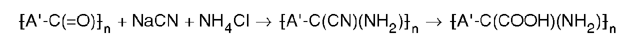
23. Baeyer-Villiger rearrangement: 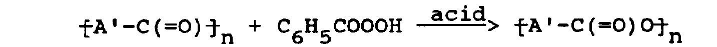
24. Acylation by anhydrides, using BF₃ in the first step and aqueous sodium acetate in the second, as described in Organic Syntheses III, 16, 51, p 90, and in Org. Reactions 8, 59-196(1954), pp 98-106 (a copolymer of CO and ethene is used by way of example): 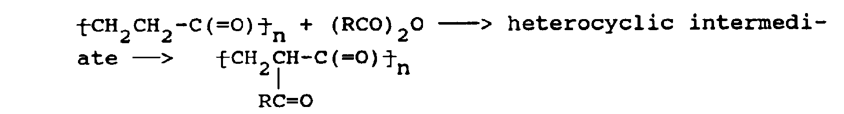
25. Sulphonation (a copolymer of CO and ethene is used by way of example): 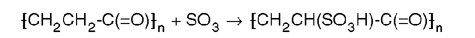
26. Introduction of cyano groups adjacent to the carbonyl moiety, by reaction with lithium diisopropylamide in tetrahydrofuran in a first step and with p-toluenesulphonyl cyanide in a second, as described in Tetrahedron Letters, 22(1981 )5011: 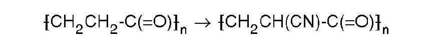
27. Dimethylation, using trimethylaluminium or dimethyltitanium chloride, thus at least partially converting the polyketone into a polyolefin: 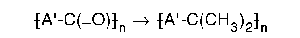
28. Dihalomethyl addition, by reaction of the carbonyl group with dihalomethanes at liquid nitrogen temperatures in the presence of lithium dicyclohexylamide, LiN(C₆H₁₁)₂, followed by a hydrolysis with water, as described in J. Am. Chem. Soc., 96(1974)3010 and Bull. Chem. Soc. Japan 50(1977)1588: 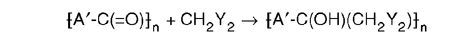
29. Preparation of a-hydroxyketones, by reaction with alkyllithium and carbon monoxide, followed by an acid hydrolysis, as described in J. Org. Chem. 48(1983)1144 and Tetrahedron Lett. 24(1983)4907: 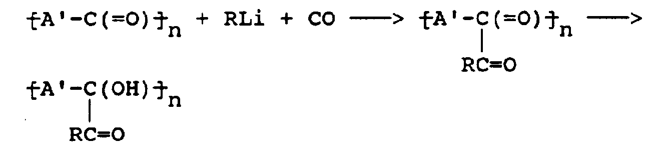
30. Reformatsky reaction:

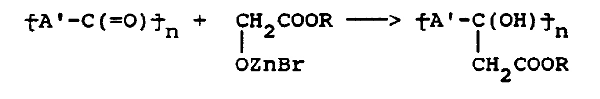

It will be appreciated that all these reactions need not, and sometimes even cannot, proceed completely, so that in some cases only part of the A' or CO groups present in the polyketone is derivatised. This implies that curing can take place on the carbonyl groups as well as on the groups derived thereof.

As indicated hereinbefore, the present invention also relates to a thermosetting composition comprising a curing agent and a thermoplastic polymer, characterised in that it comprises as the thermoplastic polymer a linear alternating copolymer of carbon monoxide and one or more olefinically unsaturated compounds, or a curable functional derivative thereof. Such compositions can be marketed as one-component systems, which are storage-stable for periods of several minutes up to several months or possibly years, depending on temperature and on the choice of components, or as two-component systems.

Curing agents suitable for the preparation of the resins of the invention are compounds able to react with the (derivatised) carbonyl groups of different (modified) polyketone chains, thereby forming a highly crosslinked, three-dimensional network. Examples of such suitable compounds are di- and polyaldehydes, di-and polyamines, ammonia, ammonium salts, di- and polyacids, di- and polyepoxides, di- and polyisocyanates, anhydrides, aminoplast resins, and adducts and precursors of these compounds.

In order to obtain an adequate cure, the amount of curing agent to be added to the polymer is from 0.1 to 10, preferably from 0.2 to 5, more preferably from 0.25 to 1.1 mole per mole of polymer. Expressed in weight percentages, the amount is in most cases more than 3% by weight, preferably from 7 to 120 %wt and in particular from 20 to 100 %wt, based on the weight of the thermoplastic polymer. The degree of cure is also controlled by the curing temperature; i.e. with a curing temperature of 125 °C or above, less agent is required to obtain sufficient cure, than with a curing temperature of 100 °C. There is no upper limit to the amount of curing agent, though above a certain level it is no longer economical to use more, or even disadvantageous to the properties of the final product.

The invention relates in particular to such a thermosetting composition which comprises as the said thermoplastic polymer a linear alternating carbon monoxide/alkylene polymer having a weight average molecular weight of from 500 to 1,800 daltons, represented by the formula 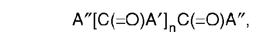 wherein each A" independently is an alkyl group of 2 up to 8 carbon atoms, or an alkoxy group of 1 up to 8 carbon atoms, each A' independently is an alkylene group of 2 up to 8 carbon atoms, and n is such that the weight average molecular weight is as defined. Then the curing agent preferably is either a primary di- or polyphosphine, a primary di-or polyamine, an adduct or precursor of an aforementioned compound, a compound having in combination two or more of the aforementioned functional groups, ammonia or an ammonium salt. More preferably the curing agent is a primary di- or polyamine, such as ethylenediamine, hexamethylenediamine, diethylenetriamine, triethylenetetramine, tetraethylenepentamine, phenylenediamine, methylenedianiline, dimethylpropylenediamine, melamine, or the like. Also preferred are carbamate adducts or metal complexes thereof, e. g. blocked di- or polyamides such as hexamethylenediamine carbamate, or the amine complexes with e.g. lithium, sodium, or potassium chloride. A most preferred curing agent for linear, alternating polyketones is diethylenetriamine. The quantity of curing agent is suitably from 0.1 to 10 mole per mole of copolymer.

The result of direct curing with a polyamine is formation of Schiff's bases and/or 2,5-pyrrolediyl heterocyclic groups incorporated into polyketones, according to the following scheme (a copolymer of CO and propene is used by way of example): 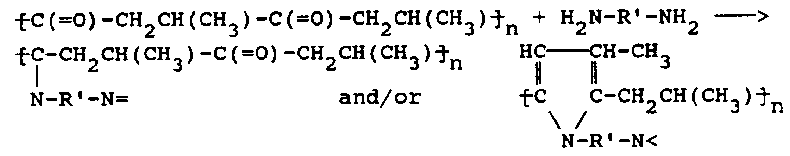 wherein R' has the meaning defined above, N= stands for a nitrogen atom built into a second Schiff's base, and N< represents a nitrogen atom built into a second pyrrolic ring.

The result of direct crosslinking using base-induced condensation reactions is the following type of bridging (a copolymer of CO and ethene is used by way of example): 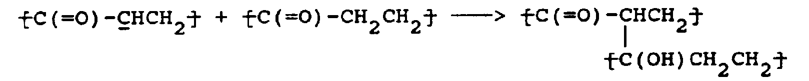 and so on.

When the polymer is one of the derivatives of a polyketone listed hereinbefore, the curing agent preferably is a di-or polyacid, a di- or polyamine, a di-or polyepoxide, a di- or polyisocyanate, an anhydride, an aminoplast resin, or an adduct or precursor of these compounds. It will be obvious to the skilled reader which agent to select for a particular derivative.

Another preferred thermosetting composition comprises as the said thermoplastic polymer a polyalcohol having at least two hydroxyl groups and a weight average molecular weight of from 200 to 10,000 daltons, which is obtainable by hydrogenation of a linear alternating copolymer having the repeating structure {A"-C(=0) in which A' is a unit derived from an ethylenically unsaturated compound A, and n is such that the weight average molecular weight is as defined. For such polyalcohol derivatives of polyketones, the aminoplast resins, such as alkoxylated or aryloxylated reaction products of formaldehyde and melamine (2,4,6-triamino-s-triazine) or benzoguanamine (2,4-diamino-6-phenyl-s-triazine) are preferred. Other preferred curing agents for polyalcohols are the optionally alkylated melamine-formaldehyde resins, of which hexakismethoxymethylmelamine (HMMM) is particularly efficient. A quantity of more than 3 %wt of a curing agent based on the weight of the polyalcohol constituent in the resin composition, in particular of from 7 to 120 %wt of a melamine-formaldehyde resin, and especially of from 20 to 100 %wt of hexakismethoxymethylmelamine as the curing agent has been found to be very effective.

The thermosetting resin composition may also comprise co-reactants that can be built-in to modify the properties of the thermoset final product. Suitable co-reactants are di- or polyalcohols such as ethylene, propylene, and trimethylene glycol, cyclopentanediol, glycidol, gluticol, ribitol, erythrol, threol, and pentaerythritol.

The resin compositions can be cast, moulded, extruded, pultruded, laminated, and they may serve as binder compositions in paints, lacquers, stoving enamels or the like. Moreover, to the resin compositions stabilisers, plasticisers, lubricants, colouring and enforcing agents, or fibres can be added without diverging from the gist of the invention.

Accordingly, the invention also relates to a process for coating or bonding an article by applying a quantity of thermosetting resin thereto, characterised in that a thermosetting composition as defined hereinbefore is applied, as well as to an article of manufacture, characterised in that it consists at least in part of a thermoset resin according to the invention.

The invention is now illustrated by the following Examples.

### Experiment A - Preparation polyketone

A linear alternating carbon monoxide/propene copolymer was prepared as follows. A mechanical stirred autoclave with a volume of 1000 ml was charged with 250 ml methanol, 106 mg Cu(II)tosylate, 120 mg 1,3-bis(diphenylphosphino) propane, and 54 mg Pd(II)acetate. The autoclave was closed, flushed and pressurised with carbon monoxide to a pressure of 60 bar, after which 100 g of (liquid) propene was added to the contents of the autoclave. The pressure was then brought to 40 bar by expanding carbon monoxide. Thereafter the contents of the autoclave were stirred, and brought to and maintained for 20 hours at 80 °C, during which time the pressure is 60 bar by continuous admittance of carbon monoxide The autoclave was then cooled, excess of carbon monoxide and propene were bled off and the autoclave was opened. There was a 69 %yield (115 g) of oligomer having a average molecular weight (GPC) of 1100. After reaction the oligomer mixture was stabilised with 2,6-di-^{t}butyl-4-methylphenol and kept under nitrogen. It appeared from analysis that the mixture contained approximately 10 %wt of components containing only one carbonyl group per molecule. These have been removed by vacuum distillation (85 °C, 0.1 mm Hg). Infrared and NMR spectroscopy confirmed the general formula C₃H₇[C(-O)C₃H₆]ₙC(-O)OCH₃, n having a value of approximately 13. The oligomer was a viscous liquid.

### Experiment B - Preparation polyalcohol

A polyalcohol was prepared by adding a solution of 2 g of the polyketone prepared in Experiment A in 25 ml THF drop-wise to a stirred suspension of 1 g LiAIH₄ or NaBH₄ in 10 ml THF. After addition, the mixture was refluxed for 18 hours. Water was added, and the mixture was filtered. Chloroform was then added and the organic layer separated, extracted with water, dried over MgS0₄, and filtered. The product was obtained by evaporation of the solvents. The polyalcohol mixture was a viscous ochre coloured liquid.

### Experiment C - Preparation thermally cured polyketone

A black and brittle coating was prepared by depositing a thin film (essentially 0.050 mm) of the polyketone prepared in Experiment A on a phosphated steel strip, and placing the strip in a temperature oven set at 160°C for 40 min. After cooling the degree of cure was qualitatively assessed by subsequently rubbing with a wad soaked in methylethyl ketone (MEK) and scratching with a pencil or knife (Pencil hardness, as defined in ASTM D3363-74). The crosslinked oligomer withstood less than 10 MEK rubs, and performed poor in the scratch test.

### Example 1

A hard, tough and light brown coating was prepared by depositing a thin film of the polyalcohol prepared in Experiment B on a phosphated steel strip, and placing the strip in a temperature oven set at 190°C for 90 min. After cooling the cure was quantitatively assessed by subsequent rubbing with a wad soaked in methylethyl ketone (MEK) and scratching with a pencil or knife (Pencil hardness, as defined in ASTM D3363-74). It appeared that the sole polyalcohol crosslinked in air to form a coating resisting more than 100 MEK rubs.

### Example 2

A hard, tough and clear coating was prepared according to the directions set out in Example 1 using 25 %wt of HMMM based on the weight of the polyalcohol and a drop of concentrated HCI. By heating at 140 °C for 60 min in a nitrogen atmosphere a 0.025 mm thick film was obtained that withstood more than 100 MEK rubs and performed well in the pencil hardness test (i.e., no visible scratch with H4 pencil).

### Example 3

Hard, tough and clear coatings were prepared according to the directions set out in Example 1 using different amounts of HMMM per mole polyalcohol, optionally a drop of surfactant to eliminate strain induced by temperature differences, and curing the resin composition for 60 min in a nitrogen atmosphere at temperatures ranging from 75 to 150 °C. Example 3/0 is presented as a comparison. The 0.025 mm thick films of Examples 3/1, 3/2 and 3/3 performed well in the pencil hardness test. The MEK resistance results are summarised in the Table below. From the table it is concluded that to obtain a attractive coating while curing under nitrogen without acid catalyst, a minimal amount of 7 %wt of HMMM based on the total of HMMM and polyalcohol (PA) is advisable. While curing under an oxygen containing atmosphere, and moreover, while using a catalyst, the minimal amount of HMMM needed to obtain an adequate coating is 3%wt.

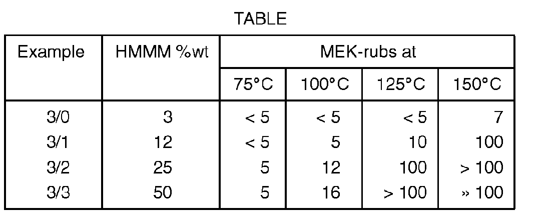

### Example 4

A hard, tough and ochre coating was prepared according to the directions set out in Example 1, using 1.1 mole of diethylenetriamine per mole oligomer as curing agent. At approximately 200 °C for 90 min. in a nitrogen atmosphere, a 0.100 mm thick film was obtained that withstood more than 100 MEK rubs and performed well in the scratch test (i.e., no visible scratch with H4 pencil).

### Example 5

A hard, tough and black coating was prepared according to the directions set out in Example 1, using 0.25 mole of diethylenetriamine per mole oligomer as curing agent. At approximately 190 °C for 90 min. in air, a 0.050 mm thick film was obtained that withstood more than 100 MEK rubs and performed well in the scratch test (H4).

From these results it is clear that primary amines as curing agents lead to hard tough coatings with a good MEK-resistance and, used in a nitrogen atmosphere, no discoloration.

## Claims (Claims for the following Contracting State(s) : AT, BE, CH, LI, DE, FR, GB, GR, IT, LU, NL, SE)

1. Thermoset resin obtainable by curing a thermoplastic polymer, characterized in that the resin is obtainable by reacting a curing agent with a linear alternating copolymer of carbon monoxide and one or more olefinically unsaturated compounds, or with a curable functional derivative thereof, and in that the weight average molecular weight of the thermoplastic polymer from which the resin is obtainable is in the range of 200 to 20,000 daltons.

2. A thermoset resin as claimed in claim 1, characterised in that the weight average molecular weight of the thermoplastic polymer from which the resin is obtainable is in the range of 200 to 10,000 daltons.

3. A thermoset resin as claimed in claim 1 or 2, characterised in that the one or more olefinically unsaturated compounds, being monomers of the thermoplastic polymer from which the resin is obtainable, are selected from alkenes, cycloalkenes, arylalkenes, alkadienes and oxycarbonylalkenes, having from 2 to 12 carbon atoms.

4. A thermoset resin as claimed in claim 3, characterised in that the one or more olefinically unsaturated compounds, being monomers of the thermoplastic polymer from which the resin is obtainable, comprise at least ethene.

5. A thermoset resin as claimed in any of claims 1-4, characterised in that the thermoplastic polymer from which the resin is obtainable, is a linear alternating copolymer of carbon monoxide and one or more olefinically unsaturated compounds.

6. A thermoset resin as claimed in claim 5, characterised in that the thermoplastic polymer from which the resin is obtainable, is a linear alternating carbon monoxide/alkylene oligomer having a weight average molecular weight of from 500 to 1,800, represented by the formula 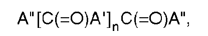 wherein each A" independently is an alkyl group of 2 up to 8 carbon atoms, or an alkoxy group of 1 up to 8 carbon atoms, each A' independently is an alkylene group of 2 up to 8 carbon atoms, and n is such that the weight average molecular weight is as defined.

7. A thermoset resin as claimed in any of claims 1 -4, characterised in that the thermoplastic polymer from which the resin is obtainable, is a curable functional derivative of a linear alternating copolymer of carbon monoxide and one or more olefinically unsaturated compounds, comprising any derivative of a ketone carbonyl group which contains a function capable of reacting with a curing agent.

8. A thermoset resin as claimed in claim 7, characterised in that the curable functional derivative of the copolymer is selected from the group comprising polybisphenols, acrylonitrile derivatives, polyaminoacids, Mannich addition products, polythiols, dithiocyclic group substituted polyketones, hemimercaptals, polyamides, polyamines, furan derivatives, polycyanohydrins, polyoxims, polyphosphonates, polyvinylketones, polyhydroxymethylketones, polyaminoalcohols, polyketone ketals and hemiketals, polyepoxide derivatives, polyhydroxysulphonate adducts, polyhydroxyphosphonate adducts, polydihalo derivatives, polyhaloketone derivatives, polyhydrazone derivatives and polyalcohols.

9. A thermoset resin as claimed in claim 8, characterised in that the curable functional derivative of the copolymer is a polyalcohol.

10. A thermoset resin as claimed in claim 9 and in any of claims 2-4, characterised in that the polyalcohol has a weight average molecular weight of from 450 to 3,500.

11. Process for the preparation of a thermoset resin as claimed in any of claims 1-10, characterised in that a curing agent is reacted with a linear alternating copolymer of carbon monoxide and one or more olefinically unsaturated compounds, or with a curable functional derivative thereof.

12. Thermosetting composition comprising a curing agent and a thermoplastic polymer, characterized in that it comprises as the thermoplastic polymer a linear alternating copolymer of carbon monoxide and one or more olefinically unsaturated compounds, or a curable functional derivative thereof, the weight average molecular weight of the linear alternating copolymer or the curable derivative thereof being in the range of 200 to 20,000 daltons.

13. Thermosetting composition as claimed in claim 12, characterised in that the weight average molecular weight of the linear alternating copolymer or the curable derivative is in the range of 200 to 10,000 daltons.

14. A thermosetting composition as claimed in claim 12 or 13, characterised in that it comprises a curing agent selected from di-and polyaldehydes, di- and polyamines, ammonia, ammonium salts, di- and polyacids, di- and polyepoxides, di- and polyisocyanates, anhydrides, aminoplast resins, and adducts and precursors of these compounds.

15. A thermosetting composition as claimed in any of claims 12-14, characterised in that it comprises more than 3 %wt of curing agent based on the weight of the thermoplastic polymer.

16. A thermosetting composition as claimed in claim 15, characterised in that it comprises from 7 to 120 %wt of curing agent.

17. A thermosetting composition as claimed in any of claims 12-16, characterised in that it comprises as the said thermoplastic polymer a linear alternating carbon monoxide/alkylene polymer having a weight average molecular weight of from 500 to 1,800, represented by the formula 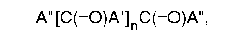 wherein each A" independently is an alkyl group of 2 up to 8 carbon atoms, or an alkoxy group of 1 up to 8 carbon atoms, each A' independently is an alkylene group of 2 up to 8 carbon atoms, and n is such that the weight average molecular weight is as defined.

18. A thermosetting composition as claimed in claim 17, characterised in that it comprises as the curing agent from 0.1 to 10 mol per mol polymer of a primary di- or polyphosphine, a primary di- or polyamine, an adduct or precursor of an aforementioned compound, a compound having in combination any of the aforementioned functional groups, ammonia, or an ammonium salt.

19. A thermosetting composition as claimed in claim 18, characterised in that the curing agent is a primary di- or polyamine, or a carbamate adduct or metal complex thereof.

20. A thermosetting composition as claimed in claim 19, characterised in that the curing agent is diethylenetriamine.

21. A thermosetting composition as claimed in any of claims 12-16, characterised in that it comprises as the said thermoplastic polymer a polyalcohol having at least two hydroxyl groups and a weight average molecular weight of from 200 to 10,000, which is obtainable by hydrogenation of a linear alternating copolymer having the repeating structure {A'-C(=0) in which A' is a unit derived from an ethylenically unsaturated compound A.

22. Process for coating or bonding an article by applying a quantity of thermosetting resin thereto, characterised in that a thermosetting composition as claimed in any of claims 12-21 is applied.

23. Article of manufacture, characterised in that it consists at least in part of a thermoset resin as claimed in claim 1.

## Claims (Claims for the following Contracting State(s) : ES)

1. Process for preparing a thermoset resin by curing a thermoplastic polymer, characterized in that the resin is obtained by reacting a curing agent with a linear alternating copolymer of carbon monoxide and one or more olefinically unsaturated compounds, or with a curable functional derivative thereof, and in that the weight average molecular weight of the thermoplastic polymer from which the resin is obtained is in the range of 200 to 20,000 daltons.

2. A process as claimed in claim 1, characterised in that the weight average molecular weight of the thermoplastic polymer from which the resin is obtained is in the range of 200 to 10,000 daltons.

3. A process as claimed in claim 1 or 2, characterised in that the one or more olefinically unsaturated compounds, being monomers of the thermoplastic polymer from which the resin is obtained, are selected from alkenes, cycloalkenes, arylalkenes, alkadienes and oxycarbonylalkenes, having from 2 to 12 carbon atoms.

4. A process as claimed in claim 3, characterised in that the one or more olefinically unsaturated compounds, being monomers of the thermoplastic polymer from which the resin is obtained, comprise at least ethene.

5. A process as claimed in any of claims 1-4, characterised in that the thermoplastic polymer from which the resin is obtained, is a linear alternating copolymer of carbon monoxide and one or more olefinically unsaturated compounds.

6. A process as claimed in claim 5, characterised in that the thermoplastic polymer from which the resin is obtained, is a linear alternating carbon monoxide/alkylene oligomer having a weight average molecular weight of from 500 to 1,800, represented by the formula 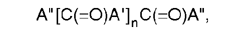 wherein each A" independently is an alkyl group of 2 up to 8 carbon atoms, or an alkoxy group of 1 up to 8 carbon atoms, each A' independently is an alkylene group of 2 up to 8 carbon atoms, and n is such that the weight average molecular weight is as defined.

7. A process as claimed in any of claims 1-4, characterised in that the thermoplastic polymer from which the resin is obtained, is a curable functional derivative of a linear alternating copolymer of carbon monoxide and one or more olefinically unsaturated compounds, comprising any derivative of a ketone carbonyl group which contains a function capable of reacting with a curing agent.

8. A process as claimed in claim 7, characterised in that the curable functional derivative of the copolymer is selected from the group comprising polybisphenols, acrylonitrile derivatives, polyaminoacids, Mannich addition products, polythiols, dithiocyclic group substituted polyketones, hemimercaptals, polyamides, polyamines, furan derivatives, polycyanohydrins, polyoxims, polyphosphonates, polyvinyl ketones, polyhydroxymethylketones, polyaminoalcohols, polyketone ketals and hemiketals, polyepoxide derivatives, polyhydroxysulphonate adducts, polyhydroxyphosphonate adducts, polydihalo derivatives, polyhaloketone derivatives, polyhydrazone derivatives and polyalcohols.

9. A process as claimed in claim 8, characterised in that the curable functional derivative of the copolymer is a polyalcohol.

10. A process as claimed in claim 9 and in any of claims 2-4, characterised in that the polyalcohol has a weight average molecular weight of from 450 to 3,500.

11. A process for preparing a thermosetting composition comprising admixing a curing agent with a thermoplastic polymer, characterized in that the thermoplastic polymer is a linear alternating copolymer of carbon monoxide and one or more olefinically unsaturated compounds, or a curable functional derivative thereof, the weight average molecular weight of the linear alternating copolymer orthe curable derivative thereof being in the range of 200 to 20,000 daltons.

12. A process as claimed in claim 11, characterised in that the weight average molecular weight of the linear alternating copolymer or the curable derivative is in the range of 200 to 10,000 daltons.

13. A process as claimed in claim 11 or 12, characterised in that the curing agent is selected f rom di- and polyaldehydes, di- and polyamines, ammonia, ammonium salts, di- and polyacids, di- and polyepoxides, di- and polyisocyanates, anhydrides, aminoplast resins, and adducts and precursors of these compounds.

14. A process as claimed in any of claims 11-13, characterised in that more than 3 %wt of curing agent based on the weight of the thermoplastic polymer is admixed with the thermoplastic polymer.

15. A process as claimed in claim 14, characterised in that from 7 to 120 %wt of curing agent is admixed with the thermoplastic polymer.

16. A process as claimed in any of claims 11-15, characterised in that the said thermoplastic polymer is a linear alternating carbon monoxide/alkylene polymer having a weight average molecular weight of from 500 to 1,800, represented by the formula 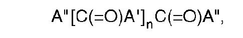 wherein each A" independently is an alkyl group of 2 up to 8 carbon atoms, or an alkoxy group of 1 up to 8 carbon atoms, each A' independently is an alkylene group of 2 up to 8 carbon atoms, and n is such that the weight average molecular weight is as defined.

17. A process as claimed in claim 16, characterised in that as the curing agent use is made of from 0.1 to 10 mol per mol polymer of a primary di- or polyphosphine, a primary di- or polyamine, an adduct or precursor of an aforementioned compound, a compound having in combination any of the aforementioned functional groups, ammonia, or an ammonium salt.

18. A process as claimed in claim 17, characterised in that the curing agent is a primary di- or polyamine, or a carbamate adduct or metal complex thereof.

19. A process as claimed in claim 18, characterised in that the curing agent is diethylenetriamine.

20. A process as claimed in any of claims 11-15, characterised in that the said thermoplastic polymer is a polyalcohol having at least two hydroxyl groups and a weight average molecular weight of from 200 to 10,000, which is obtainable by hydrogenation of a linear alternating copolymer having the repeating structure (A'-C(=O) ) in which A' is a unit derived from an ethylenically unsaturated compound A.

21. Process for coating or bonding an article by applying a quantity of thermosetting resin thereto, characterised in that a thermosetting composition which is obtainable by a process as claimed in any of claims 11 -20 is applied.

22. Article of manufacture, characterised in that it consists at least in part of a thermoset resin which is obtainable by a process as claimed in claim 1.

## Patentansprüche (Patentansprüche für folgende(n) Vertragsstaat(en) : AT, BE, CH, LI, DE, FR, GB, GR, IT, LU, NL, SE)

1. Hitzegehärtetes Harz, erhältlich durch Härten eines thermoplastischen Polymers, dadurch gekennzeichnet, daß das Harz durch Umsetzen eines Härtungsmittels mit einem linearen alternierenden Copolymer aus Kohlenmonoxid und einer oder mehreren olefinisch ungesättigten Verbindungen oder mit einem härtbaren funktionellen Derivat hievon erhältlich ist, und daß das gewichtsmittlere Molekulargewicht des thermoplastischen Polymers, aus welchem das Harz erhältlich ist, im Bereich von 200 bis 20.000 Dalton liegt.

2. Hitzegehärtetes Harz nach Anspruch 1, dadurch gekennzeichnet, daß das gewichtsmittlere Molekulargewicht des thermoplastischen Polymers, aus dem das Harz erhältlich ist, im Bereich von 200 bis 10.000 Dalton liegt.

3. Hitzegehärtetes Harz nach Anspruch 1 oder 2, dadurch gekennzeichnet, daß die eine oder die mehreren olefinisch ungesättigten Verbindungen, die Monomere des thermoplastischen Polymers darstellen, aus dem das Harz erhältlich ist, unter Alkenen, Cycloalkenen, Arylalkenen, Alkadienen und Oxycarbonylalkenen mit 2 bis 12 Kohlenstoffatomen ausgewählt sind

4. Hitzegehärtetes Harz nach Anspruch 3, dadurch gekennzeichnet, daß die eine oder die mehreren olefinisch ungesättigten Verbindungen, die Monomere des thermoplastischen Polymers darstellen, aus dem das Harz erhältlich ist, zumindest Ethen umfassen.

5. Hitzegehärtetes Harz nach einem der Ansprüche 1 bis 4, dadurch gekennzeichnet, daß das thermoplastische Polymer, aus dem das Harz erhältlich ist, ein lineares alternierendes Copolymer von Kohlenmonoxid mit einer oder mit mehreren olefinisch ungesättigten Verbindungen ist.

6. Hitzegehärtetes Harz nach Anspruch 5, dadurch gekennzeichnet, daß das thermoplastische Polymer, aus dem das Harz erhältlich ist, ein lineares alternierendes Kohlenmonoxid/AlkylenOligomer mit einem gewichtsmittleren Molekulargewicht von 500 bis 1800, dargestellt durch die Formel 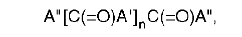 ist, worin jedes A" unabhängig eine Alkylgruppe mit 2 bis 8 Kohlenstoffatomen oder eine Alkoxygruppe mit 1 bis 8 Kohlenstoffatomen bedeutet, jedes A' unabhängig eine Alkylengruppe mit 2 bis 8 Kohlenstoffatomen darstellt und n einen solchen Wert aufweist, daß das gewichtsmittlere Molekulargewicht im definierten Bereich liegt.

7. Hitzegehärtetes Harz nach einem der Ansprüche 1 bis 4, dadurch gekennzeichnet, daß das thermoplastische Polymer, aus dem das Harz erhältlich ist, ein härtbares funktionelles Derivat eines linearen alternierenden Copolymers von Kohlenmonoxid mit einer oder mit mehreren olefinisch ungesättigten Verbindungen ist, einschließlich etwaiger Derivate einer Keton-Carbonylgruppe, die eine zur Reaktion mit einem Härtungsmittel befähigte Funktion enthält.

8. Hitzegehärtetes Harz nach Anspruch 7, dadurch gekennzeichnet, daß das härtbare funktionelle Derivat des Copolymers aus der Polybisphenole, Acrylnitrilderivate, Polyaminosäuren, Mannich-Additionsprodukte, Polythiole, mit einer cyclischen Dithiogruppe substituierte Polyketone, Hemimercaptale, Polyamide, Polyamine, Furanderivate, Polycyanhydrine, Polyoxime, Polyphosphonate, Polyvinylketone, Polyhydroxymethylketone, Polyaminoalkohole, Polyketonketale und -hemiketale, Polyepoxidderivate, Polyhydroxysulfonataddukte, Polyhydroxyphosphonataddukte, Polydihalogenderivate, Polyhalogenketonderivate, Polyhydrazonderivate und Polyalkohole umfassenden Gruppe ausgewählt ist.

9. Hitzehärtbares Harz nach Anspruch 8, dadurch gekennzeichnet, daß das härtbare funktionelle Derivat des Copolymers ein Polyalkohol ist.

10. Hitzehärtbares Harz nach Anspruch 9 und einem der Ansprüche 2 bis 4, dadurch gekennzeichnet, daß der Polyalkohol ein gewichtsmittleres Molekulargewicht von 450 bis 3500 aufweist.

11. Verfahren zur Herstellung eines hitzegehärteten Harzes nach einem der Ansprüche 1 bis 10, dadurch gekennzeichnet, daß ein Härtungsmittel mit einem linearen alternierenden Copolymer von Kohlenmonoxid mit einer oder mit mehreren olefinisch ungesättigten Verbindungen oder mit einem härtbaren funktionellen Derivat hievon umgesetzt wird.

12. Hitzehärtbare Zusammensetzung, umfassend ein Härtungsmittel und ein thermoplastisches Polymer, dadurch gekennzeichnet, daß sie als das thermoplastische Polymer ein lineares alternierendes Copolymer von Kohlenmonoxid mit einer oder mit mehreren olefinisch ungesättigten Verbindungen oder ein härtbares funktionelles Derivat hievon umfaßt, wobei das gewichtsmittlere Molekulargewicht des linearen alternierenden Copolymers oder des härtbaren Derivats hievon im Bereich von 200 bis 20.000 Dalton liegt.

13. Hitzehärtbare Zusammensetzung nach Anspruch 12, dadurch gekennzeichnet, daß das gewichtsmittlere Molekulargewicht des linearen alternierenden Copolymers oder des härtbaren Derivats hievon im Bereich von 200 bis 10.000 Dalton liegt.

14. Hitzehärtbare Zusammensetzung nach Anspruch 12 oder 13, dadurch gekennzeichnet, daß sie ein unter Di- und Polyaldehyden, Di- und Polyaminen, Ammoniak, Ammoniumsalzen, Di- und Polysäuren, Di- und Polyepoxiden, Di-und Polyisocyanaten, Anhydriden, Aminoplastharzen und Addukten und Vorläufern dieser Verbindungen ausgewähltes Härtungsmittel umfaßt.

15. Hitzehärtbare Zusammensetzung nach einem der Ansprüche 12 bis 14, dadurch gekennzeichnet, daß sie mehr als 3 Gew.-% Härtungsmittel, bezogen auf das Gewicht des thermoplastischen Polymers, umfaßt.

16. Hitzehärtbare Zusammensetzung nach Anspruch 15, dadurch gekennzeichnet, daß sie von 7 bis 120 Gew-% Härtungsmittel umfaßt.

17. Hitzehärtbare Zusammensetzung nach einem der Ansprüche 12 bis 16, dadurch gekennzeichnet, daß sie als das thermoplastische Polymer ein lineares alternierendes Kohlenmonoxid/AlkylenPolymer mit einem gewichtsmittleren Molekulargewicht von 500 bis 1800, dargestellt durch die Formel 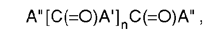 umfaßt, worin jedes A" unabhängig eine Alkylgruppe mit 2 bis 8 Kohlenstoffatomen oder eine Alkoxygruppe mit 1 bis 8 Kohlenstoffatomen darstellt, jedes A' unabhängig eine Alkylengruppe mit 2 bis 8 Kohlenstoffatomen bedeutet und n einen solchen Wert aufweist, daß das gewichtsmittlere Molekulargewicht im definierten Bereich liegt.

18. Hitzehärtbare Zusammensetzung nach Anspruch 17, dadurch gekennzeichnet, daß sie als Härtungsmittel 0,1 bis 10 Mol eines primären Di- oder Polyphosphins, eines primären Di- oder Polyamins, eines Addukts oder Vorläufers einer zuvor genannten Verbindung, einer Verbindung, die in Kombination beliebige der zuvor genannten funktionellen Gruppen aufweist, Ammoniak oder eines Ammoniumsalzes je Mol Polymer umfaßt.

19. Hitzehärtbare Zusammensetzung nach Anspruch 18, dadurch gekennzeichnet, daß das Härtungsmittel ein primäres Di- oder Polyamin oder ein Carbamataddukt oder Metallkomplex hievon ist.

20. Hitzehärtbare Zusammensetzung nach Anspruch 19, dadurch gekennzeichnet, daß das Härtungsmittel Diethylentriamin ist.

21. Hitzehärtbare Zusammensetzung nach einem der Ansprüche 12 bis 16, dadurch gekennzeichnet, daß sie als das thermoplastische Polymer einen Polyalkohol mit wenigstens zwei Hydroxylgruppen und einem gewichtsmittleren Molekulargewicht von 200 bis 10.000 umfaßt, welcher Polyalkohol durch Hydrierung eines linearen alternierenden Copolymers mit der wiederkehrenden Struktur fA'-C(=O) }, worin A' eine von einer ethylenisch ungesättigten Verbindung A abgeleitete Einheit darstellt, erhältlich ist.

22. Verfahren zum Überziehen oder Binden eines Gegenstandes durch Auftragen einer Menge eines hitzehärtenden Harzes, dadurch gekennzeichnet, daß eine hitzehärtbare Zusammensetzung nach einem der Ansprüche 12 bis 21 aufgetragen wird.

23. Fertigungsgegenstand, dadurch gekennzeichnet, daß er wenigstens teilweise aus einem hitzegehärteten Harz nach Anspruch 1 besteht.

## Patentansprüche (Patentansprüche für folgende(n) Vertragsstaat(en) : ES)

1. Verfahren zur Herstellung eines hitzegehärteten Harzes durch Härten eines thermoplastischen Polymers, dadurch gekennzeichnet, daß das Harz durch Umsetzen eines Härtungsmittels mit einem linearen alternierenden Copolymer aus Kohlenmonoxid und einer oder mehreren olefinisch ungesättigten Verbindungen oder mit einem härtbaren funktionellen Derivat hievon erhalten wird, und daß das gewichtsmittlere Molekulargewicht des thermoplastischen Polymers, aus welchem das Harz erhalten wird, im Bereich von 200 bis 20.000 Dalton liegt.

2. Verfahren nach Anspruch 1, dadurch gekennzeichnet, daß das gewichtsmittlere Molekulargewicht des thermoplastischen Polymers, aus dem das Harz erhalten wird, im Bereich von 200 bis 10.000 Dalton liegt.

3. Verfahren nach Anspruch 1 oder 2, dadurch gekennzeichnet, daß die eine oder die mehreren olefinisch ungesättigten Verbindungen, die Monomere des thermoplastischen Polymers darstellen, aus dem das Harz erhalten wird, unter Alkenen, Cycloalkenen, Arylalkenen, Alkadienen und Oxycarbonylalkenen mit 2 bis 12 Kohlenstoffatomen ausgewählt sind.

4. Verfahren nach Anspruch 3, dadurch gekennzeichnet, daß die eine oder die mehreren olefinisch ungesättigten Verbindungen, die Monomere des thermoplastischen Polymers darstellen, aus dem das Harz erhalten wird, zumindest Ethen umfassen.

5. Verfahren nach einem der Ansprüche 1 bis 4, dadurch gekennzeichnet, daß das thermoplastische Polymer, aus dem das Harz erhalten wird, ein lineares alternierendes Copolymer von Kohlenmonoxid mit einer oder mit mehreren olefinisch ungesättigten Verbindungen ist.

6. Verfahren nach Anspruch 5, dadurch gekennzeichnet, daß das thermoplastische Polymer, aus dem das Harz erhalten wird, ein lineares alternierendes Kohlenmonoxid/Alkylen Oligomer mit einem gewichtsmittleren Molekulargewicht von 500 bis 1800, dargestellt durch die Formel 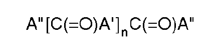 ist, worin jedes A" unabhängig eine Alkylgruppe mit 2 bis 8 Kohlenstoffatomen oder eine Alkoxygruppe mit 1 bis 8 Kohlenstoffatomen bedeutet, jedes A' unabhängig eine Alkylengruppe mit 2 bis 8 Kohlenstoffatomen darstellt und n einen solchen Wert aufweist, daß das gewichtsmittlere Molekulargewicht im definierten Bereich liegt.

7. Verfahren nach einem der Ansprüche 1 bis 4, dadurch gekennzeichnet, daß das thermoplastische Polymer, aus dem das Harz erhalten wird, ein härtbares funktionelles Derivat eines linearen alternierenden Copolymers von Kohlenmonoxid mit einer oder mit mehreren olefinisch ungesättigten Verbindungen ist, einschließlich etwaiger Derivate einer Keton-Carbonylgruppe, die eine zur Reaktion mit einem Härtungsmittel befähigte Funktion enthält.

8. Verfahren nach Anspruch 7, dadurch gekennzeichnet, daß das härtbare funktionelle Derivat des Copolymers aus der Polybisphenole, Acrylnitrilderivate, Polyaminosäuren, Mannich-Additionsprodukte, Polythiole, mit einer cyclischen Dithiogruppe substituierte Polyketone, Hemimercaptale, Polyamide, Polyamine, Furanderivate, Polycyanhydrine, Polyoxime, Polyphosphonate, Polyvinylketone, Polyhydroxymethylketone, Polyaminoalkohole, Polyketonketale und -hemiketale, Polyepoxidderivate, Polyhydroxysulfonataddukte, Polyhydroxyphosphonataddukte, Polydihalogenderivate, Polyhalogenketonderivate, Polyhydrazonderivate und Polyalkohole umfassenden Gruppe ausgewählt ist.

9. Verfahren nach Anspruch 8, dadurch gekennzeichnet, daß das härtbare funktionelle Derivat des Copolymers ein Polyalkohol ist.

10. Verfahren nach Anspruch 9 und einem der Ansprüche 2 bis 4, dadurch gekennzeichnet, daß der Polyalkohol ein gewichtsmittleres Molekulargewicht von 450 bis 3500 aufweist.

11. Verfahren zur Herstellung einer hitzehärtbaren Zusammensetzung, umfassend das Vermischen eines Härtungsmittels mit einem thermoplastischen Polymer, dadurch gekennzeichnet, daß das thermoplastische Polymer ein lineares alternierendes Copolymer von Kohlenmonoxid mit einer oder mit mehreren olefinisch ungesättigten Verbindungen oder ein härtbares funktionelles Derivat hievon ist, wobei das gewichtsmittlere Molekulargewicht des linearen alternierenden Copolymers oder des härtbaren Derivats hievon im Bereich von 200 bis 20.000 Dalton liegt.

12. Verfahren nach Anspruch 11, dadurch gekennzeichnet, daß das gewichtsmittlere Molekulargewicht des linearen alternierenden Copolymers oder des härtbaren Derivats hievon im Bereich von 200 bis 10.000 Dalton liegt.

13. Verfahren nach Anspruch 11 oder 12, dadurch gekennzeichnet, daß das Härtungsmittel unter Di- und Polyaldehyden, Di- und Polyaminen, Ammoniak, Ammoniumsalzen, Di- und Polysäuren, Di- und Polyepoxiden, Di- und Polyisocyanaten, Anhydriden, Aminoplastharzen und Addukten und Vorläufern dieser Verbindungen ausgewählt ist.

14. Verfahren nach einem der Ansprüche 11 bis 13, dadurch gekennzeichnet, daß mehr als 3 Gew.-% des Härtungsmittels, bezogen auf das Gewicht des thermoplastischen Polymers, mit dem thermoplastischen Polymer vermischt werden.

15. Verfahren nach Anspruch 14, dadurch gekennzeichnet, daß 7 bis 120 Gew.-% des Härtungsmittels mit dem thermoplastischen Polymer vermischt werden.

16. Verfahren nach einem der Ansprüche 11 bis 15, dadurch gekennzeichnet, daß das thermoplastische Polymer ein lineares alternierendes Kohlenmonoxid/Alkylen-Polymer mit einem gewichtsmittleren Molekulargewicht von 500 bis 1800, dargestellt durch die Formel 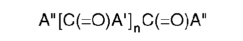 ist, worin jedes A" unabhängig eine Alkylgruppe mit 2 bis 8 Kohlenstoffatomen oder eine Alkpxygruppe mit 1 bis 8 Kohlen-stoffatomen darstellt, jedes A' unabhängig eine Alkylengruppe mit 2 bis 8 Kohlenstoffatomen bedeutet und n einen solchen Wert aufweist, daß das gewichtsmittlere Molekulargewicht im definierten Bereich liegt.

17. Verfahren nach Anspruch 16, dadurch gekennzeichnet, daß als Härtungsmittel 0,1 bis 10 Mol eines primären Di-oder Polyphosphins, eines primären Di- oder Polyamins, eines Addukts oder Vorläufers einer zuvor genannten Verbindung, einer Verbindung, die in Kombination beliebige der zuvor genannten funktionellen Gruppen aufweist, Ammoniak oder eines Ammoniumsalzes je Mol Polymer verwendet werden.

18. Verfahren nach Anspruch 17, dadurch gekennzeichnet, daß das Härtungsmittel ein primäres Di- oder Polyamin oder ein Carbamataddukt oder Metallkomplex hievon ist.

19. Verfahren nach Anspruch 18, dadurch gekennzeichnet, daß das Härtungsmittel Diethylentriamin ist.

20. Verfahren nach einem der Ansprüche 11 bis 15, dadurch gekennzeichnet, daß das thermoplastische Polymer ein Polyalkohol mit wenigstens zwei Hydroxylgruppen und einem gewichtsmittleren Molekulargewicht von 200 bis 10.000 ist, welcher Polyalkohol durch Hydrierung eines linearen alternierenden Copolymers mit der wiederkehrenden Struktur fA'-C(=O) }, worin A' eine von einer ethylenisch ungesättigten Verbindung A abgeleitete Einheit darstellt, erhältlich ist.

21. Verfahren zum Überziehen oder Binden eines Gegenstandes durch Auftragen einer Menge eines hitzehärtenden Harzes, dadurch gekennzeichnet, daß eine hitzehärtbare Zusammensetzung aufgetragen wird, die nach einem Verfahren nach einem der Ansprüche 11 bis 20 erhältlich ist

22. Fertigungsgegenstand, dadurch gekennzeichnet, daß er wenigstens teilweise aus einem hitzegehärteten Harz besteht, das nach einem Verfahren nach Anspruch 1 erhältlich ist.

## Revendications (Revendications pour l'(les) Etat(s) contractant(s) suivant(s) : AT, BE, CH, LI, DE, FR, GB, GR, IT, LU, NL, SE)

1. Résine thermodurcie que l'on peut obtenir par le durcissement d'un polymère thermoplastique, caractérisée en ce que l'on obtient la résine en question par la réaction d'un agent de durcissement avec un copolymère alternant et linéaire de monoxyde de carbone et d'un ou plusieurs composés à insaturation oléfinique, ou avec un dérivé fonctionnel durcissable d'un tel copolymère, et en ce que le poids moléculaire moyen en poids du polymère thermoplastique à partir duquel on peut obtenir la résine varie de 200 à 20 000 daltons.

2. Résine thermodurcie suivant la revendication 1, caractérisée en ce que le poids moléculaire moyen en poids du polymère thermoplastique à partir duquel on peut obtenir la résine varie de 200 à 10 000 daltons.

3. Résine thermodurcie suivant la revendication 1 ou 2, caractérisée en ce que le ou les composés à insaturation oléfinique, qui sont des monomères du polymère thermoplastique à partir duquel on peut obtenir la résine, sont choisis parmi les alcènes, les cycloalcènes_{;} les arylalcènes, les alcadiènes et les oxycarbonylalcènes, possédant de 2 à 12 atomes de carbone.

4. Résine thermodurcie suivant la revendication 3, caractérisée en ce que le ou les composés à insaturation oléfinique, qui sont des monomères du polymère thermoplastique à partir duquel on peut obtenir la résine, comprennent au moins de l'éthène.

5. Résine thermodurcie suivant l'une quelconque des revendications 1 à 4, caractérisée en ce que le polymère thermoplastique à partir duquel on peut obtenir la résine est un copolymère alternant et linéaire de monoxyde de carbone et d'un ou plusieurs composés à insaturation oléfinique.

6. Résine thermodurcie suivant la revendication 5, caractérisée en ce que le polymère thermoplastique à partir duquel on peut obtenir la résine est un oligomère alternant et linéaire de monoxyde de carbone et d'un alkylène possédant un poids moléculaire moyen en poids de 500 à 1800, représenté par la formule : 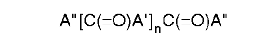 dans laquelle chaque symbole A" représente indépendamment un radical alkyle comportant de 2 à 8 atomes de carbone, ou un radical alcoxy comportant de 1 à 8 atomes de carbone, chaque symbole A' est indépendamment choisi parmi un radical alkylène comportant de 2 à 8 atomes de carbone, et n est tel que le poids moléculaire moyen en poids soit tel que défini.

7. Résine thermodurcie suivant l'une quelconque des revendications 1 à 4, caractérisée en ce que le polymère thermoplastique à partir duquel on peut obtenir la résine est un dérivé fonctionnel durcissable d'un copolymère alternant et linéaire de monoxyde de carbone et d'un ou plusieurs composés à insaturation oléfinique, comprenant n'importe quel dérivé d'un radical carbonyle cétonique qui contient une fonction capable de réagir avec un agent de durcissement.

8. Résine thermodurcie suivant la revendication 7, caractérisée en ce que le dérivé fonctionnel durcissable du copolymère est choisi dans le groupe formé par les polybisphénols, les dérivés de l'acrylonitrile, les polyaminoacides, les produits d'addition de Mannich, les polythiols, les polycétones substituées par des radicaux dithiocycliques, les hémimercaptals, les polyamides, les polyamines, les dérivés du furanne, les polycyanhydrines, les polyoximes, les polyphosphonates, les polyvinylcétones, les polyhydroxyméthylcétones, les polyaminoalcools, les polycétonecétals et les hémicétals, les dérivés de polyépoxydes, les adduits de polyhydroxysulfonates, les adduits de polyhydroxyphosphonates, les dérivés polydihalogénés, les dérivés de polyhalocétones, les dérivés de polyhydrazones et les polyalcools.

9. Résine thermodurcie suivant la revendication 8, caractérisée en ce que le dérivé fonctionnel durcissable du polymère est un polyalcool.

10. Résine thermodurcie suivant la revendication 9 et n'importe laquelle des revendication 2 à 4, caractérisée en ce que le polyalcool possède un poids moléculaire moyen en poids de 450 à 3500.

11. Procédé de préparation d'une résine thermodurcie suivant l'une quelconque des revendications 1 à 10, caractérisé en ce que l'on fait réagir un agent de durcissement avec un copolymère alternant et linéaire de monoxyde de carbone et d'un ou plusieurs composés à insaturation oléfinique, ou avec un dérivé fonctionnel durcissable d'un tel copolymère.

12. Composition thermodurcissable comprenant un agent de durcissement et un polymère thermoplastique, caractérisée en ce qu'elle comprend, à titre du polymère thermoplastique, un copolymère alternant et linéaire de monoxyde de carbone et d'un ou plusieurs composés à insaturation oléfinique, ou un dérivé fonctionnel durcissable d'un tel copolymère, le poids moléculaire moyen en poids du copolymère alternant et linéaire variant de 200 à 20 000 daltons.

13. Composition thermodurcissable suivant la revendication 12, caractérisée en ce que le poids moléculaire moyen en poids du copolymère alternant et linéaire ou de son dérivé durcissable varie de 200 à 10 000 daltons.

14. Composition thermodurcissable suivant l'une quelconque des revendications 12 et 13, caractérisée en ce qu'elle comprend un agent de durcissement choisi parmi les dialdéhydes et les polyaldéhydes, les diamines et les polyamines, l'ammoniac, les sels d'ammonium, les diacides et les polyacides, les diépoxydes et les polyépoxydes, les diisocyanates et les polyisocyanates, les anhydrides, les résines aminoplastes, et les adduits et précurseurs de ces composés.

15. Composition thermodurcissable suivant l'une quelconque des revendications 12 à 14, caractérisée en ce qu'elle comprend plus de 3% en poids d'agent de durcissement, sur base du poids du polymère thermoplastique.

16. Composition thermoducissable suivant la revendication 15, caractérisée en ce qu'elle comprend de 7 à 120% en poids d'agent de durcissement.

17. Composition thermodurcissable suivant l'une quelconque des revendications 12 à 16, caractérisée en ce qu'elle comprend, à titre du polymère thermoplastique précité, un polymère alternant et linéaire de monoxyde de carbone et d'alkylène possédant un poids moléculaire moyen en poids de 500 à 1800, représenté par la formule : 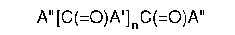 dans laquelle chaque symbole A" représente indépendamment un radical alkyle possédant de 2 à 8 atomes de carbone, ou un radical alcoxy possédant de 1 à 8 atomes de carbone, chaque symbole A' représente indépendamment un radical alkylène possédant de 2 à 8 atomes de carbone, et n est tel que le poids moléculaire moyen en poids soit tel que défini.

18. Composition thermodurcissable suivant la revendication 17, caractérisée en ce qu'elle comprend, à titre d'agent de durcissement, de 0, 1 à 10 moles par mole de polymère d'une diphosphine ou polyphosphine primaire, d'une diamine ou d'une polyamine primaire, d'un adduit ou précurseur d'un des composés précités, d'un composé possédant en combinaison n'importe lesquels des radicaux fonctionnels susmentionnés, d'ammoniac, ou d'un sel d'ammonium.

19. Composition thermodurcissable suivant la revendication 18, caractérisée en ce que l'agent de durcissement est une diamine ou une polyamine primaire, ou un adduit du type carbamate ou un complexe de métal de ce composé.

20. Composition thermodurcissable suivant la revendication 19, caractérisée en ce que l'agent de durcissement est la diéthylènetriamine.

21. Composition thermodurcissable suivant l'une quelconque des revendications 12 à 16, caractérisée en ce qu'elle comprend, à titre du polymère thermoplastique précité, un polyalcool possédant au moins deux radicaux hydroxyle et un poids moléculaire moyen en poids de 200 à 10 000, que l'on peut obtenir par l'hydrogénation d'un copolymère alternant et linéaire possédant la structure récurrente : 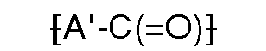 dans laquelle le symbole A' représente une unité dérivée d'un composé A à insaturation éthylénique.

22. Procédé de revêtement ou de liaison d'un article par l'application à cet article d'une certaine quantité de résine thermodurcissable, caractérisé en ce que l'on applique une composition thermodurcissable suivant l'une quelconque des revendications 12 à 21.

23. Article de fabrication, caractérisé en ce qu'il est constitué, au moins en partie, d'une résine thermodurcie telle que définie dans la revendication 1.

## Revendications (Revendications pour l'(les) Etat(s) contractant(s) suivant(s) : ES)

1. Procédé de préparation d'une résine thermodurcie par le durcissement d'un polymère thermoplastique, caractérisé en ce que la résine est obtenue par la réaction d'un agent de durcissement avec un copolymère alternant et linéaire de monoxyde de carbone et d'un ou plusieurs composés à insaturation oléfinique, ou avec un dérivé fonctionnel durcissable d'un tel copolymère, et en ce que le poids moléculaire moyen en poids du polymère thermoplastique à partir duquel on peut obtenir la résine varie de 200 à 20 000 daltons.

2. Procédé suivant la revendication 1, caractérisé en ce que le poids moléculaire moyen en poids du polymère thermoplastique à partir duquel on peut obtenir la résine varie de 200 à 10 000 daltons.

3. Procédé suivant l'une quelconque des revendications 1 et 2, caractérisé en ce que le ou les composés à insaturation oléfinique, qui sont des monomères du polymère thermoplastique à partir duquel on peut obtenir la résine, sont choisis parmi les alcènes, les cycloalcènes, les arylalcènes, les alcadiènes et les oxycarbonylalcènes, possédant de 2 à 12 atomes de carbone.

4. Procédé suivant la revendication 3, caractérisé en ce que le ou les composés à insaturation oléfinique, qui sont des monomères du polymère thermoplastique à partir duquel on peut obtenir la résine, comprennent au moins de l'éthène.

5. Procédé suivant l'une quelconque des revendications 1 à 4, caractérisé en ce que le polymère thermoplastique à partir duquel on peut obtenir la résine est un copolymère alternant et linéaire de monoxyde de carbone et d'un ou plusieurs composés à insaturation oléfinique.

6. Procédé suivant la revendication 5, caractérisé en ce que le polymère thermoplastique à partir duquel on peut obtenir la résine est un oligomère alternant et linéaire de monoxyde de carbone et d'un alkylène possédant un poids moléculaire moyen en poids de 500 à 1800, représenté par la formule : 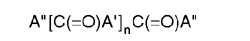 dans laquelle chaque symbole A" représente indépendamment un radical alkyle comportant de 2 à 8 atomes de carbone, ou un radical alcoxy comportant de 1 à 8 atomes de carbone, chaque symbole A' est indépendamment choisi parmi un radical alkylène comportant de 2 à 8 atomes de carbone, et n est tel que le poids moléculaire moyen en poids soit tel que défini.

7. Procédé suivant l'une quelconque des revendications 1 à 4, caractérisé en ce que le polymère thermoplastique à partir duquel on peut obtenir la résine est un dérivé fonctionnel durcissable d'un copolymère alternant et linéaire de monoxyde de carbone et d'un ou plusieurs composés à insaturation oléfinique, comprenant n'importe quel dérivé d'un radical carbonyle cétonique qui contient une fonction capable de réagir avec un agent de durcissement.

8. Procédé suivant la revendication 7, caractérisé en ce que le dérivé fonctionnel durcissable du copolymère est choisi dans le groupe formé par les polybisphénols, les dérivés de l'acrylonitrile, les polyaminoacides, les produits d'addition de Mannich, les polythiols, les polycétones substituées par des radicaux dithiocycliques, les hémimercaptals, les polyamides, les polyamines, les dérivés du furanne, les polycyanhydrines, les polyoximes, les polyphosphonates, les polyvinylcétones, les polyhydroxyméthylcétones, les polyaminoalcools, les polycétonecétals et les hémicétals, les dérivés de polyépoxydes, les adduits de polyhydroxysulfonates, les adduits de polyhydroxyphosphonates, les dérivés polydihalogénés., les dérivés.de polyhalocétones, les dérivés de polyhydrazones et les polyalcools.

9. Procédé suivant la revendication 8, caractérisé en ce que le dérivé fonctionnel durcissable du polymère est un polyalcool.

10. Procédé suivant la revendication 9 et n'importe laquelle des revendications 2 à 4, caractérisé en ce que le polyalcool possède un poids moléculaire moyen en poids de 450 à 3500.

11. Procédé de préparation d'une composition thermodurcissable, caractérisé en ce que l'on mélange un agent de durcissement avec un polymère thermoplastique, caractérisé en ce que le polymère thermoplastique est un copolymère alternant et linéaire de monoxyde de carbone et d'un ou plusieurs composés à insaturation oléfinique, ou un dérivé fonctionnel durcissable de ce copolymère, le poids moléculaire moyen en poids du copolymère alternant et linéaire ou de son dérivé durcissable variant de 200 à 20 000 daltons.

12. Procédé suivant la revendication 11, caractérisé en ce que le poids moléculaire moyen en poids du copolymère alternant et linéaire ou de son dérivé durcissable varie de 200 à 10 000 daltons.

13. Procédé suivant l'une quelconque des revendications 11 et 12, caractérisé en ce que l'agent de durcissement est choisi parmi les dialdéhydes et les polyaldéhydes, les diamines et les polyamines, l'ammoniac, les sois d'ammonium, les diacides et les polyacides, les diépoxydes et les polyépoxydes, les diisocyanates et les polyisocyanates, les anhydrides, les résines aminoplastes, et les adduits et précurseurs de ces composés.

14. Procédé suivant l'une quelconque des revendications 11 à 13, caractérisé en ce que l'on mélange plus de 3% en poids d'agent de durcissement au polymère thermoplastique, sur base du poids du polymère thermoplastique.

15. Procédé suivant la revendication 14, caractérisé en ce que l'on mélange de 7 à 120% en poids de l'agent de durcissement au polymère thermoplastique.

16. Procédé suivant l'une quelconque des revendications 11 à 15, caractérisé en ce que le polymère thermoplastique en question est un polymère alternant et linéaire de monoxyde de carbone et d'alkylène possédant un poids moléculaire moyen en poids de 500 à 1800, représenté par la formule : 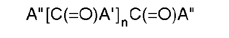 dans laquelle chaque symbole A" représente indépendamment un radical alkyle possédant de 2 à 8 atomes de carbone, ou un radical alcoxy possédant de 1 à 8 atomes de carbone, chaque symbole A' représente indépendamment un radical alkylène possédant de 2 à 8 atomes de carbone, et n est tel que le poids moléculaire moyen en poids soit tel que défini.

17. Procédé suivant la revendication 16, caractérisé en ce qu'à titre d'agent de durcissement, on utilise de 0,1 à 10 moles par mole de polymère d'une diphosphine ou polyphosphine primaire, d'une diamine ou polyamine primaire, d'un adduit ou précurseur d'un des composés précités, d'un composé possédant en combinaison n'importe lesquels des radicaux fonctionnels susmentionnés, d'ammoniac, ou d'un sel d'ammonium.

18. Procédé suivant la revendication 17, caractérisé en ce que l'agent de durcissement est une diamine ou une polyamine primaire, ou un adduit du type carbamate ou un complexe de métal de ce composé.

19. Procédé suivant la revendication 18, caractérisé en ce que l'agent de durcissement est la diéthylènetriamine.

20. Procédé suivant l'une quelconque des revendications 11 à 15, caractérisé en ce que le polymère thermoplastique en question est un polyalcool possédant au moins deux radicaux hydroxyle et un poids moléculaire moyen en poids de 200 à 10 000, que l'on peut obtenir par l'hydrogénation d'un copolymère alternant et linéaire possédant la structure récurrente : 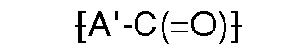 dans laquelle le symbole A' représente une unité dérivée d'un composé A à insaturation éthylénique.

21. Procédé de revêtement ou de liaison d'un article par l'application à cet article d'une certaine quantité de résine thermodurcissable, caractérisé en ce que l'on applique une composition thermodurcissable suivant l'une quelconque des revendications 11 à 20.

22. Article de fabrication, caractérisé en ce qu'il est constitué, au moins en partie, d'une résine thermodurcie telle que définie dans la revendication 1.
